# EUROPEAN PATENT SPECIFICATION

(11) **EP 0 532 714 B1**
(45) Date of publication and mention of the grant of the patent: **12.02.1997**
(21) Application number: 91921010.4
(22) Date of filing: 07.06.1990
(51) Int. Cl.: C08F 2/46, B29C 71/04, B29K 27/12, B29K 27/18

(54) **RADIATION CURING OF PERFLUOROELASTOMERS**
STRAHLENVERNETZUNG VON PERFLUORELASTOMEREN
DURCISSEMENT PAR IRRADIATION DES ELASTOMERES PERFLUORIQUES

(43) Date of publication of application: 24.03.1993
(73) Proprietor: E.I. DU PONT DE NEMOURS AND COMPANY, Wilmington Delaware 19898 (US)
(72) Inventor: LOGOTHETIS, Anestis, Leonidas, Wilmington, DE 19810 (US)
(74) Representative: Jones, Alan John
(86) International application number: US9003076
(87) International publication number: WO9118930

(56) References cited:
- EP-A- 0 203 457
- DE-A- 1 957 993
- US-A- 3 142 629
- US-A- 4 035 565
- US-A- 4 281 092
- US-A- 4 529 784
- US-A- 4 564 263
- US-A- 4 565 614

## Description

### Background of the Invention

Perfluoroelastomers have long been used in a variety of applications that require excellent resistance to high temperatures, oxidative and chemical attack. One particularly outstanding fluoropolymer that has been used in elastomeric applications is that prepared from tetrafluoroethylene (TFE) and perfluoro (methyl vinyl) ether (PMVE). To permit the crosslinking in these copolymers that is essential to good elastomeric properties, a small percentage of termonomer is incorporated, as described, for example, in Finlay, U.S. -A- 4,529,784, Apotheker et al., U.S. -A- 4,035,565, and Breazeale, U.S. -A- 4,281,092.

In the past, such perfluoroelastomers have been cured by compounding with the dipotassium salt of bis-phenol AF (K₂AF) or peroxide curing agents, followed by treatment with elevated heat and/or pressure to cure the polymer. While these techniques have produced excellent cured products, it would be desirable to have a similar cured product without the presence of the curing agent residues, which can exude during subsequent processing or use. Fluoropolymers have, in the past, been treated with ionizing radiation to promote curing, as described, for example in U.S. -A 3,223,689, US-A-3,513,043, US-A-4,256,856, and US-A-4,565,614. However, such techniques have previously been limited to those compositions which were not perfluorinated. It was previously concluded that radiation would tend to degrade a perfluoropolymer without effective curing.

### Summary of the Invention

The present invention is based on the discovery that certain perfluoroelastomers can be cured with radiation alone, without the compounding with curing agents that was previously thought necessary.

Specifically, the present invention provides a process for curing a perfluoropolymer derived from tetrafluoroethylene, a perfluoroalkyl perfluorovinyl ether wherein the alkyl group contains 1 to 5 carbon atoms, and up to 2 mole percent of cure site monomer derived from ethylenically unsaturated compounds, which process comprises exposing the polymer to from 2 to 20 megarads (2x10⁴ to 2x10⁵ J/kg) of radiation, in the absence of curing agent or in the presence of less than 500 parts per million (ppm) of curing agent.

The present invention further provides cured perfluoroelastomers resulting from the above process, the perfluoroelastomers being free from curing agent residue or of less than 500 ppm curing agent residue.

### Detailed Description of the Invention

The present invention relates to fully fluorinated polymers, such as those prepared from tetrafluorethylene, a perfluoroalkyl perfluorvinyl ether in which the alkyl group contains from 1 to 5 carbon atoms, and up to two mole percent of cure site or crosslinking units. The crosslinking units derived from ethylenically unsaturated compounds which can be used include cyano-substituted perfluorovinyl ethers as described in Breazeale, US-A-4,328,092; bromine-containing olefins as described in Apotheker et al., US-A-4,035,565; and non-perfluorinated cure-site monomers described in Finlay, US-A-4,529,784. In general, the cure-site monomers are present in an amount sufficient to provide at least 0.1 mole percent of each of perfluorophenyl and bromine or iodine in the resulting polymer. The perfluorophenyl and bromine or iodine functionalities can be part of the same ethylenically unsaturated monomer or can be provided by different ethylenically unsaturated monomers.

Accordingly, the cure site monomer is selected from ethylenically unsaturated compounds having nitrile, perfluorophenyl, bromo- and iodo- substituents, the units being present in an amount sufficient to provide at least 0.1 mole percent each of at least one of perfluorophenyl, nitrile, bromine and iodine in the resulting polymer.

Blends of perfluoroelastomers can also be used in the present invention, including, for example, those described in Aufdermarsh, US-A-4,413,094.

The present invention is based on the discovery that these perfluoropolymers can be cured without the curing agents that have been used in the past, but by exposure to radiation in an amount of from 2 to 20 megarads (2x10⁴ to 2x10⁵ J/kg). Exposure to less than 2 megarads (2x10⁴ J/kg) does not provide reliable elastomer performance, while little additional benefit is obtained with more than 20 megarads (2x10⁵ J/kg). Dosages of from 6 to 10 megarads (6x10⁴ to 10⁵ J/kg) have been found to be particularly satisfactory. The radiation can be applied in a single dose or in multiple applications. Multiple applications can minimize heat build up in the polymer being treated.

The radiation can be applied to the perfluoroelastomers by a radiation source which has the following characteristics:
1. A high voltage power supply that generates DC power and creates the acceleration potential for the electrons.
2. An accelerator to raise the electrons to their full potential energy.
3. A scanning system which uniformly distributes the accelerated beams of electrons over the required area.
The exposure to the radiation can be for a period of a few seconds to several minutes, depending on the intensity of the radiation source. A wide variety of commercially available radiation sources can be used, including, for example, high energy Van de Graaf electron beam accelerators, such as that commercially available from High Voltage Engineering as Model K-S. The curing can be carried out at ambient pressure and temperatures of from 20 to 40 °C.

The polymers used in the present invention should be formed into their desired final configuration prior to curing, as with typical elastomers and curing processes. If, for example, the polymer is formed into a film, the film will vary in thickness considerably, depending on the intended use. However, in general, the perfluoroelastomer films will exhibit a thickness of from 0.05 to 2.5 mm. In the alternative, the polymers can be formed into a variety of shaped articles, as will be evident to those skilled in the art.

The cured perfluoroelastomers exhibit excellent tensile properties, and are free from curing agent residue; or the cured products have less than 500 parts per million, and especially less than 100 parts per million, of such residue. Accordingly, the cured compositions provide chemical free perfluoroelastomeric parts, which have heretofore been unavailable using previously known curing techniques.

The polymers can also contain one or more of the additives known to be useful in fluoropolymer compositions, such as pigments, fillers, pore-forming agents and plasticizers.

The present invention is further illustrated by the following specific examples, in which parts and percentages are by weight unless otherwise indicated.

### Examples 1-12 and Control Examples A-F

In Examples 1-12 and Controls A, B, C, D, E, and F perfluoroelastomer compositions were prepared from 54 to 58 weight % tetrafluoroethylene, 40 to 44 weight % perfluoro (methylvinyl ether) and a cure site monomer. The cure site monomers used and their concentrations were as follows:

### Examples 1-3 - 1.1 weight %

4-bromo-3,3,4,4-tetrafluorobutene

### Controls A, B, C - 0.34 weight %

vinylidene fluoride

### Examples 7-9 - 2.2 weight %

perfluoro-(8-cyano-5-methyl-3,6-dioxa-1-octene)

In Examples 4-6, a blend of the perfluoroelastomer of Examples 1-3 and 15% of a melt processable TFE copolymer ("Teflon" PFA fluoropolymer) was used. In Control Examples D-F, a blend of the perfluoroelastomer of Control Examples A, B, C and 15% "Teflon" PFA fluoropolymer was used. In Examples 10-12, a blend of the perfluoroelastomer of Examples 7-9 and 15% "Teflon" PFA fluoropolymer was used. (Teflon is a registered Trade Mark).

In each Example, the perfluoroelastomer was formed into an O-ring and then cured by exposure to radiation, using a 3 MEV (million electron volts) electron beam Van de Graaf accelerator. The radiation dosages used varied, as summarized in Table I. The resulting cured O-rings were evaluated for their tensile properties, including Stress at 100% Strain (hereinafter referred to as M100), Tensile Strength at Break (hereinafter referred to as TB) and Elongation at Break (hereinafter referred to as EB), using ASTM Method D412, and the results are reported in Table I. The O-rings were post cured in an oven at 232°C for a period of 16 hours.
Control samples that had not been irradiated did not survive the post cure treatment without distortion. Each sample, if tested, would exhibit less than 100 ppm of curing agent residue.

These results indicate that cured perfluoroelastomers can be obtained using radiation alone, providing finished products without the curing agent residue that previously was present when using conventional curing agents.

**TABLE I**

| Example (Control) | 1-3² | 4-6² | A,B,C³ | D,E,F³ | 7-9 | 10-12 |
|---|---|---|---|---|---|---|
| 8 MRADS (8 x 10⁴ J/kg) | | | | | | |
| M100 | 310 | 540 | 230(235) | 385(380) | 295(245) | 490(455) |
| TB | 540 | 850 | 500(425) | 430(675) | 650(590) | 990(950) |
| EB | 205 | 220 | 295(470) | 150(320) | 210(265) | 230(280) |
| | | | | | | |

| 12 MRADS (12 x 10⁴ J/kg) | | | | | | |
|---|---|---|---|---|---|---|
| M100 | 310 | 550 | 230(240) | 420(375) | 300(240) | 555(480) |
| TB | 470 | 830 | 440(510) | 540(700) | 605(595) | 950(715) |
| EB | 174 | 202 | 225(492) | 145(360) | 184(262) | 185(195) |
| | | | | | | |

| 16 MRADS (16 x 10⁴ J/kg) | | | | | | |
|---|---|---|---|---|---|---|
| M100 | 335 | 550 | 250(215) | 450(270) | 300(270) | 580(485) |
| TB | 455 | 710 | 485(510) | 900(640) | 605(560) | 910(820) |
| EB | 153 | 150 | 200(420) | 210(325) | 173(235) | 168(220) |

| | | | | | | |
|---|---|---|---|---|---|---|
| ¹ The values in parentheses are for perfluoroelastomers post-cured at 232°C for 16 hrs under nitrogen. | | | | | | |
| ² Did not survive post-cure. | | | | | | |
| ³ Borderline in surviving post-cure. | | | | | | |

### Examples 13-28 and Control Examples G-U

In Examples 13-28 and Control Examples G-U perfluoroelastomer compositions were prepared from the same weight percentages of tetrafluoroethylene and perfluoro (methylvinyl ether) as in Examples 1-12 along with a cure site monomer. The cure site monomers used and their concentrations were as follows:

### Examples 13-20 - 2.2 wt %

perfluoro-(8-cyano-5-methyl-3,6-dioxa-1-octene)

### Control Examples G-M - 0.35 weight %

vinylidene fluoride

### Examples 21-28 - 1.1 wt %

4-bromo-3,3,4,4-tetrafluorobutene.

These fluoropolymers were made in an aqueous emulsion using ammonium persulfate as an initiator.

In Control Examples N-U, a blend of 92% of the perfluoropolymer of Control Examples G-M and 8% of the melt processable TFE copolymer was used.

In some of the compositions, as indicated in Table II, 2.0 parts per hundred of the resin of trimethyl allylisocyanurate radical trap (TMAIC) were added to the perfluoroelastomer. The perfluoropolymers of Examples 13-20 contained 12 phr SAF reinforcing agent (carbon black) and 0.25 phr 18-Crown-6 as a processing aid. The perfluoropolymers of Examples 21-28 and Control Examples G-U contained 10 phr SAF black reinforcing agent and 0.25 phr 18-Crown-6 as a processing aid. The perfluoropolymers of Examples 21-28 also contained 3.0 phr of lead oxide.

In each Example, the perfluoropolymer was compounded and moulded into a dumbbell and then cured by exposure to radiation as described above. The radiation dosages used for Examples 13, 17, 21, 25 and for Control Examples J,N and R were 4 megarads, and varied for Examples 14-16, 18-20, 22-24, 26-28 and for Control Examples G-I, K-M, O-Q and S-U from 8 to 16 megarads (8x10⁴ to 16x10⁴ J/kg), as summarised in Table II. The compounds were all post cured at 232°C for 16 hours under Nitrogen. The resulting elastomers were evaluated for tensile properties as in Examples 1-12 and Control Examples A-F, and the results are reported in Table II.

**TABLE II**

| Example (Control) | 13-16 | 17-20 | G-I | J-M | 21-27 | 25-28 | N-Q | R-U |
|---|---|---|---|---|---|---|---|---|
| TMAIC, phr | -- | 2.0 | -- | 2.0 | -- | 2.0 | -- | 2.0 |
| | | | | | | | | |

| 4 MRADS (4 x 10⁴ J/kg) | | | | | | | | |
|---|---|---|---|---|---|---|---|---|
| M100 | 694 | 730 | | 365 | 406 | 701 | 785 | 763 |
| TB | 2094 | 1900 | | 433 | 437 | 1306 | 1156 | 1270 |
| EM | 242 | 254 | | 694 | 523 | 323 | 592 | 514 |
| | | | | | | | | |

| 8 MRADS (8 x 10⁴ J/kg) | | | | | | | | |
|---|---|---|---|---|---|---|---|---|
| M100 | 934 | 946 | 490 | 414 | 399 | 779 | 765 | 812 |
| TB | 2027 | 1746 | 841 | 1246 | 509 | 1630 | 1397 | 1758 |
| EM | 164 | 163 | 624 | 390 | 471 | 217 | 449 | 312 |
| | | | | | | | | |

| 12 MRADS (12 x 10⁴ J/kg) | | | | | | | | |
|---|---|---|---|---|---|---|---|---|
| M100 | 1119 | 1295 | 515 | 496 | 428 | 870 | 739 | 941 |
| TB | 1809 | 1666 | 1189 | 1126 | 823 | 1198 | 1483 | 1748 |
| EM | 133 | 119 | 401 | 217 | 364 | 134 | 316 | 204 |
| | | | | | | | | |

| 16 MRADS (16 x 10⁴ J/kg) | | | | | | | | |
|---|---|---|---|---|---|---|---|---|
| M100 | 1209 | --- | 498 | 649 | 448 | 1107 | 744 | 1237 |
| TB | 1585 | 1659 | 1115 | 1335 | 990 | 1291 | 1375 | 1783 |
| EM | 118 | 91 | 306 | 170 | 280 | 112 | 245 | 140 |

### Examples 29-44 and Control Examples V-Z, A',B' and C'

In Examples 29-44 and Control Examples V-C' the general procedure of Examples 1-12 and Control Examples A-F was repeated, using the unblended polymers. Accordingly, the perfluoropolymer of Examples 1-3 was used in Examples 29-36 and the perfluoropolymer of Control Examples A,B and C was used in Control Examples V-C'; and the perfluoropolymer of Examples 7-9 was used in Examples 37-44. 2 phr TMAIC were added as indicated in Table III. All compounds contained 10 phr SAF black reinforcing agent and 0.25 phr 18-Crown-6 as a processing aid.

In each Example, and Control Example, the perfluoroelastomer was formed into an O-ring and then cured by exposure to radiation, followed by post-cure at 232°C for 16 hours.

The cured perfluoroelastomers O-rings were evaluated for compression set resistance, and the results summarized in Table III.

**TABLE III**

| Example | 29-32 | 33-36 | V-Y | Z,A',B',C' | 37-40 | 41-44 |
|---|---|---|---|---|---|---|
| TMAIC,2PHR | None | Yes | None | Yes | None | Yes |
| Compression Set Resistance at 200°C for 70 hrs | | | | | | |
| 4 Mrads¹ | 100 | 77 | 100 | 100 | 75 | 81 |
| 8 Mrads² | 96 | 49 | 100 | 70 | 61 | 72 |
| 12 Mrads³ | 86 | 44 | 100 | 52 | 55 | 58 |
| 16 Mrads⁴ | 60 | 42 | 81 | 44 | 49 | 48 |

| | | | | | | |
|---|---|---|---|---|---|---|
| ¹ 4 x 10⁴ J/kg | | | | | | |
| ² 8 x 10⁴ J/kg | | | | | | |
| ³ 12 x 10⁴ J/kg | | | | | | |
| ⁴ 16 x 10⁴ J/kg | | | | | | |

## Claims

1. A process for curing a perfluoropolymer derived from tetrafluoroethylene, a perfluoroalkyl perfluorovinyl ether wherein the alkyl group contains 1 to 5 carbon atoms, and up to 2 mole percent of cure site monomer units derived from ethylenically unsaturated compounds, the units being selected from those having at least one of nitrile, perfluorophenyl, bromo- and iodo-substituents, the units being present in an amount sufficient to provide at least 0.1 mole percent of at least one of perfluorophenyl, nitrile, bromine, and iodine in the resulting polymer, which process comprises exposing the perfluoropolymer to from 2 to 20 megarads (2 x 10⁴ to 2 x 10⁵ J/kg) of radiation, in the absence of curing agent or in the presence of less than 500 ppm of curing agent.

2. A process of claim 1 wherein the perfluoropolymer is exposed to from 6 to 10 megarads (6 x 10⁴ to 10⁵ J/kg) of radiation.

3. A process of either of claims 1 and 2 wherein the polymer is prepared from tetrafluoroethylene, a perfluoroalkyl perfluorovinyl ether and 4-bromo-3,3,4,4-tetrafluorobutene-1.

4. A process of either of claims 1 and 2 wherein the polymer is prepared from tetrafluoroethylene, a perfluoroalkyl perfluorovinyl ether and perfluoro-(8-cyano-5-methyl-3,6-dioxa-1-octene).

5. A process of any one of the preceding claims wherein the radiation is applied in a single dose.

6. A process of any one of claims 1 to 4 wherein the radiation is applied in two or more dosages.

## Patentansprüche

1. Verfahren zum Härten eines Perfluorpolymeren, das sich ableitet von Tetrafluorethylen, einem Perfluoralkylperfluorvinylether, worin die Alkylgruppe 1 bis 5 Kohlenstoffatome enthält, und bis zu 2 Mol-% Härtungsstellenmonomereinheiten, die sich von ethylenisch ungesättigten Verbindungen ableiten, wobei die Einheiten aus denjenigen ausgewählt werden, die wenigstens einen von Nitril-, Perfluorphenyl-, Brom- und Iodsubstituenten aufweisen, und wobei die Einheiten in einer Menge vorhanden sind, die ausreicht, um wenigstens 0,1 Mol-% von wenigstens einem von Perfluorphenyl, Nitril, Brom und Iod in dem resultierenden Polymer bereitzustellen, wobei das Verfahren das Aussetzen des Perfluorpolymeren einer Strahlung von 2 bis 20 Megarad (2x10⁴ bis 10⁵ J/kg) in Abwesenheit von Härtungsmittel oder in Gegenwart von weniger als 500 ppm Härtungsmittel umfaßt.

2. Verfahren nach Anspruch 1, bei dem das Perfluorpolymer einer Strahlung von 6 bis 10 Megarad (6x10⁴ bis 10⁵ J/kg) ausgesetzt wird.

3. Verfahren nach einem der Ansprüche 1 und 2, bei dem das Polymer aus Tetrafluorethylen, einem Perfluoralkylperfluorvinylether und 4-Brom-3,3,4,4-Tetrafluorbuten-1 hergestellt wird.

4. Verfahren nach einem der Ansprüche 1 und 2, bei dem das Polymer aus Tetrafluorethylen, einem Perfluoralkylperfluorvinylether und Perfluor-(8-cyano-5-methyl-3,6-dioxa-1-octen) hergestellt wird.

5. Verfahren nach einem der vorhergehenden Ansprüche, bei dem die Strahlung in einer Einzeldosis angewendet wird.

6. Verfahren nach einem der Ansprüche 1 bis 4, bei dem die Strahlung in zwei oder mehreren Dosen angewendet wird.

## Revendications

1. Procédé pour durcir un polymère perfluoré obtenu à partir de tétrafluoroéthylène, d'un éther de perfluoroalkyle et de perfluorovinyle dans lequel le groupe alkyle contient 1 à 5 atomes de carbone, et de jusqu'à 2 % en moles d'unités monomères à sites de durcissement obtenues à partir de composés éthyléniquement insaturés, les unités étant choisies parmi celles ayant au moins l'un des substituants nitrile, perfluorophényle, bromo et iodo, les unités étant présentes en une quantité suffisante pour fournir au moins 0,1 % en moles d'au moins l'un des substituants perfluorophényle, nitrile, brome et iode dans le polymère résultant, ce procédé comprenant l'exposition du polymère perfluoré à une irradiation de 2 à 20 mégarads (2 x 10⁴ à 2 x 10⁵ J/kg), en l'absence d'un agent de durcissement ou en présence de moins de 500 ppm d'agent de durcissement.

2. Procédé selon la revendication 1, dans lequel le polymère perfluoré est exposé à une radiation de 6 à 10 mégarads (6 x 10⁴ à 10⁵ J/kg).

3. Procédé selon l'une quelconque des revendications 1 et 2, dans lequel le polymère est préparé à partir de tétrafluoroéthylène, d'un éther de perfluoroalkyle et de perfluorovinyle et de 4-bromo-3,3,4,4-tétrafluorobutène-1.

4. Procédé selon l'une quelconque des revendications 1 et 2, dans lequel le polymère est préparé à partir de tétrafluoroéthylène, d'un éther de perfluoroalkyle et de perfluorovinyle et de perfluoro(8-cyano-5-méthyl-3,6-dioxa-1-octène).

5. Procédé selon l'une quelconque des revendications précédentes, dans lequel l'irradiation est appliquée en une dose unique.

6. Procédé selon l'une quelconque des revendications 1 à 4, dans lequel l'irradiation est appliquée en deux doses ou plus.
